Europäisches Patentamt

European Patent Office

Office européen des brevets

(19)

(11) Veröffentlichungsnummer: **0 290 396**

**A1**

(12) **EUROPÄISCHE PATENTANMELDUNG**

(21) Anmeldenummer: **88810297.7**

(22) Anmeldetag: **05.05.88**

(51) Int. Cl.⁴: **H 02 J 7/10**
H 02 J 7/00, H 01 M 10/46

(30) Priorität: **06.05.87 CH 1727/87**

(43) Veröffentlichungstag der Anmeldung:
**09.11.88 Patentblatt 88/45**

(84) Benannte Vertragsstaaten:
**AT BE CH DE ES FR GB GR IT LI LU NL SE**

(71) Anmelder: **Knepper, Hans-Reinhard**
**Pfalzgrafenstrasse 80**
**D-4200 Oberhausen 14 (DE)**

(72) Erfinder: **Knepper, Hans-Reinhard**
**Pfalzgrafenstrasse 80**
**D-4200 Oberhausen 14 (DE)**

(74) Vertreter: **Troesch, Jacques J., Dipl.-Ing. et al**
**Walchestrasse 19**
**CH-8035 Zürich (CH)**

(54) **Stromversorgungsanordnung.**

(57) Um an einem Akkumulator (5) die Betriebsgeschichte sicher ermitteln zu können, wie zur Prüfung von Gewährleistungsansprüchen, wird er untrennbar in einem Gehäuse (3) mit einer Lade- und Ueberwachungseinheit (7) verbunden.

FIG.1

EP 0 290 396 A1

## Beschreibung

### Stromversorgungsanordnung

Die vorliegende Erfindung betrifft eine Stromversorgungsanordnung mit mindestens einem wieder ladbaren Akkumulator, einer Lade- und Ueberwachungseinheit sowie mit Verbraucherstromausgängen und einem Ladespeisungseingang.

Aus der FR-A-2260211 ist eine Hilfsstromversorgungsanordnung bekannt, bei welcher ein wieder ladbarer Akkumulator sowie eine Ladeeinheit mit den Betriebszustand der Versorgungsanordnung überwachenden Mitteln in einem mehrteiligen Gehäuse untergebracht sind. Um mit dieser Hilfsstromversorgungsanordnung Entpannungshilfe zu leisten bei Geräten, deren eigene Akkumulatoren entladen sind, sind an der Hilfsstromversorgungsanordnung Verbraucherstromausgänge vorgesehen sowie ein Netzanschluss, um, über das Netz und die im Gehäuse vorgesehene Ladeeinheit, die hilfsanordnungseigene Akkumulatoranordnung zu laden.

Aus der GB-A-2028022 ist eine tragbare Stromversorgungsanordnung für batterie- bzw. akkumulatorbetriebene Geräte, in deren Nähe kein Netzanschluss vorhanden ist, beschrieben. Bei der hier vorgestellten Stromversorgungsanordnung sind wiederum in einem mehrteiligen Gehäuse ein Akkumulator, eine Ladeeinheit sowie den Betriebszustand der Anordnung anzeigende Ueberwachungsmittel vorgesehen, desgleichen ein Netzanschluss, um über die erwähnte Ladeeinheit den Akkumulator der Anordnung zu laden.

Wie bei getrennt eingesetzten Akkumulatoren und Lade- und Ueberwachungseinheiten, besteht auch bei diesen, in einem gemeinsamen mehrteiligen Gehäuse vereint transportierbaren Akkumulator und Lade- und Ueberwachungseinheiten, ein Problem bei Gewährleistungsansprüchen. Für den Hersteller derartiger Akkumulatoren ist es ausserordentlich schwierig, wenn nicht unmöglich, z.B. innerhalb von Garantiezeiten defekt angelieferte Akkumulatoren, vor Erfüllung der Gewährleistungsansprüche, daraufhin zu prüfen, ob die Akkumulatoren denn auch sachgemäss eingesetzt wurden, eine Bedingung zur Erfüllung der erwähnten Ansprüche. Dieses Problem wird desto akuter, je grössere Akkumulator-Anordnungen eingesetzt werden, was der heutigen Tendenz entspricht, z.B. kraftstoffgetriebene Aggregate mehr und mehr durch elektrisch gespiesene zu ersetzen, beispielsweise bei Motorfahrzeugen.

Die vorliegende Erfindung bezweckt, das Problem zu lösen, dass an Akkumulatoren, beispielsweise zur Untersuchung der Berechtigung von Gewährleistungsansprüchen, nicht oder nur sehr schwer eruierbar ist, wie sie vorgängig eingesetzt wurden. Dies wird bei der Stromversorgungsanordnung der obgenannten Art durch Ausbildung nach dem Wortlaut des kennzeichnenden Teils von Anspruch 1 gelöst.

Es wird m.a.W. die Lade- und Ueberwachungseinheit untrennbar dem jeweiligen Akkumulator oder der jeweiligen Akkumulatorgruppe zugeordnet, womit nun die Möglichkeit gegeben ist, jederzeit die Betriebsbedingung, die der Akkumulator durchlebt hat, zu ermitteln.

Bei mittels einzelner Akkumulatoren oder, bei grösseren elektrischen Verbrauchern, mittels Sätzen von akkumulatorenbetriebenen Verbrauchern, ist es weiter üblich, deren Stromversorgungen für das Wiederaufladen entweder aus den elektrischen Verbrauchern auszubauen und in zwangsentlüfteten Räumen wieder aufzuladen oder mit den elektrischen Verbrauchern hierzu in derartige zwangsentlüftete Räume einzufahren.

Das Vorsehen von sehr gut belüfteten Räumen ist deshalb wesentlich, weil üblicherweise beim Wiederaufladen derartiger Akkumulatoren, wie beispielsweise von Bleiakkumulatoren mit flüssigem Elektrolyt, bei der Gasung während des Ladevorganges, Wasserstoff entsteht, der abgeführt werden muss, damit er sich nicht mit dem Luftsauerstoff zu Knallgas in gefährlicher Konzentration verbindet. Nun sind in letzter Zeit Akkumulatoren bekannt geworden, die praktisch gasungsfrei ladbar sind. Darunter fallen Akkumulatoren mit Gel-Elektrolyt, wie Bleiakkumulatoren mit Gel-Elektrolyt, wie sie beispielsweise unter der Bezeichnung Dryfit-Traction-Block oder generell Dryfit-Akkumulatoren von der Akkumulatorenfabrik Sonnenschein GmbH in Berlin oder von der Firma Sonnenschein Batteries Inc., Cheshire, Connecticut, USA, vertrieben werden. Bezüglich dieser Technologie kann beispielsweise auch auf die DE-A-3 521 200 verwiesen werden.

Um nun die erwähnte Stromversorgung, ohne sie aus dem damit betriebenen Verbraucher ausbauen zu müssen, um sie, wie erwähnt, in zwangsentlüfteten Räumen einer Ladeoperation zu unterziehen, in Ladebetrieb zu nehmen, d.h. den Ladevorgang wo auch immer durchführen zu können, wird weiter vorgeschlagen, dass der Akkumulator an der erwähnten Stromversorgungsanordnung ein mindestens genähert gasungsfrei ladbarer Akkumulator ist, vorzugsweise ein Bleiakkumulator mit Gel-Elektrolyt. Dadurch wird nun zusätzlich die Möglichkeit geschaffen, die Verbindung zwischen Lade- und Ueberwachungseinheit einerseits und Akkumulator anderseits durch eine Ummantelung bzw. Kapselung, wie durch Vergiessen, zu erstellen, was der erfindungsgemässen Stromversorgungsanordnung ein kompaktes Aussehen verleiht und die erfindungsgemäss gestellte Aufgabe optimal löst. Damit können Stromversorgungen der genannten Art mit ein oder mehreren der genannten, mindestens genähert gasungsfrei ladbaren Akkumulatoren in einem entsprechenden Fach am elektrischen Verbraucher fest eingebaut werden, können ausgangsseitig mit dem Verbraucher fest verdrahtet werden, so dass lediglich Anschlüsse für den Ladespeisestrom am Verbraucher nach aussen geführt werden müssen.

Im weiteren ist es bekannt, dass eine der wesentlichen Grössen zur Identifikation des Zustandes von Akkumulatoren durch die ab Neuzustand oder ab letztem Ladevorgang geflossene Verbraucherstrommenge gegeben ist, die in Ah angegeben wird, und z.B. zu der vom Hersteller angegebenen Nenn-Ah-Zahl in Beziehung gesetzt wird. Diese Grösse ist nun eine derjenigen Grössen, die zur Identifikation des Zustandes des Akkumulators und dessen Betriebsgeschichte ausgewertet werden kann. Aus diesem Grund wird nun weiter vorgeschlagen, dass die Lade- und Ueberwachungseinheit einen Verbraucherstromintegrator umfasst.

Generell ist es beispielsweise aus der FR-A-2 507 016 bekannt, den Verbraucherstrom eines Akkumulators durch integral-analoge Operationen zu registrieren. Dies löst aber an sich die oben erwähnte Aufgabe nicht, wenn nicht erfindungsgemäss sichergestellt ist, dass die Ueberwachungseinheit - mit dem Verbraucherstromintegrator - untrennbar mit dem jeweiligen Akkumulator verbunden ist und der Verbraucherstromintegrator nicht ohne weiteres rücksetzbar ist, da ansonsten die Identifikationsmöglichkeit der durch den Akkumulator erlebten, elektrischen Betriebsgeschichte nicht mit Sicherheit gegeben ist.

Im weiteren ist es bekannt, dass je nach Akkumulatorzustand der Ladevorgang mit geregelter Ladespannung oder mit geregeltem Ladestrom oder allenfalls mit beidem in vorgegebener zeitlicher Abfolge erfolgen sollte.

Deshalb wird weiter vorgeschlagen, dass die Lade- und Ueberwachungseinheit mindestens je eine vorzugsweise steuerbare Ladestrom- und/oder -Spannungsquelle umfasst.

Um im weiteren zu erreichen, dass sich eine Bedienungsperson beim Aufladen des Akkumulators nicht über wahlweise, je nach Akkumulatorzustand einzusetzende Ladeprozeduren informieren muss und eine entsprechende Steuerung vornehmen muss, wird weiter vorgeschlagen, dass die Lade- und Ueberwachungseinheit eine Ladeprogrammsteuereinheit umfasst, die die zeitliche Abfolge des Aufschaltens der Ladestrom- und/oder -Spannungsquelle auf den Akkumulator steuert bzw. den zeitlichen Verlauf der Ladespannung und/oder des Ladestromes steuert.

Bevorzugterweise wird dabei weiter vorgeschlagen, dass die genannte Steuereinheit Speichermittel für mindestens zwei Steuersequenzen umfasst und dass die Steuereinheit die Ladestrom- und/oder -Spannungsquelle entsprechend den abgespeicherten Sequenzen ansteuert bzw. die Ladespannung und/oder den Ladestrom entsprechend ansteuert.

Um nun weiter zu erreichen, dass eine Bedienungsperson sich auch bezüglich des momentanen Zustandes des Akkumulators nicht Rechenschaft zu geben braucht, was durch Ablesen vorgesehener Spannungsanzeigen und/oder Ah-Anzeigen durchaus möglich ist, wird weiter vorgeschlagen, dass an der Lade- und Ueberwachungseinheit Organe vorgesehen sind zur Registrierung den Momentanzustand des Akkumulators identifizierender, physikalischer Grössen. Diese Registrierung erlaubt nun, insbesondere die Betriebsgeschichte des Akkumulators jederzeit und auch im Hinblick auf mögliche Fehlbetriebsbedingungen zu rekonstruieren, wozu insbesondere als derartige physikalische Grössen die Einsatzzeit des Akkumulators und/oder die kumulierte Betriebszeit und/oder die Anzahl und allenfalls die Art und Weise erlebter Ladeoperationen und/oder erlebter Tiefentladungen, erlebter Kurzschlüsse etc. registriert werden und zur Ausgabe bereitgehalten werden.

Allenfalls sind diese Organe zur Registrierung mit einer Selektionseinheit verbunden, welche nun aufgrund der ihr von den Organen zugeführten Identifizierungsinformation eine Ladeprogrammsteuereinheit zur Aufschaltung einer entsprechenden Ladesequenz ansteuert. Zu letzterwähntem Zweck wird insbesondere vorgeschlagen, dem Verbraucherstromintegrator eine Diskriminatoreinheit nachzuschalten, die das Erreichen vorgegebener Ah-Werte ausgangsseitig festhält und dass die Diskriminatoreinheit ausgangsseitig die Art und Weise eines nachfolgenden Aufladevorganges ansteuert.

Für die Steuerung des Aufladevorganges ist nämlich der Verbrauchtzustand des Akkumulators mit eine wesentliche Grösse. Es wird bei der allfälligen Steuerung der Selektionseinheit mindestens mit Teilen der registrierten, identifizierenden physikalischen Grössen erreicht, dass direkt und insbesondere aus dem bisher geflossenen Verbraucherstrom auf den Ladezustand des Akkumulators geschlossen werden kann und dass nach Massgabe insbesondere dieser Information entsprechende, dem momentanen Akkumulatorzustand zugeordnete Ladesteuersequenzen angesteuert werden können.

Zum elektrischen Betrieb der elektrischen und/oder elektronischen Komponenten an der erfindungsgemässen Anordnung wird weiter vorgeschlagen, dass die Akkumulatorspannung über einen Spannungsregler die übrigen Komponenten der Lade- und Ueberwachungseinheit elektrisch speist.

Mit Vorsehen eines derartigen Spannungsreglers, der eine geregelte Ausgangsspannung liefert, die tiefer ist als die zulässige Akkumulatorspannung, wird die genannte elektrische Speisung über den ganzen, zulässigerweise von der Akkumulator-Ausgangsspannung erreichbaren Wertebereich sichergestellt.

Im weiteren sollte ein Akkumulator oder ein Akkumulatorensatz nicht so lange ohne Wiederaufladung betrieben werden, dass eine sog. Tiefentladung erfolgt.

Bei Erreichen von Tiefentladungszuständen wird nämlich die Lebensdauer eines derartigen Akkumulators wesentlich reduziert, verglichen mit der Lebensdauer, wenn derartige Tiefentladungen nie eintreten. Dasselbe gilt für Akkumulator-Kurzschlüsse.

Um dies zu verhindern, wird weiter vorgeschlagen, dass die Lade- und Ueberwachungseinheit einen Tiefentladungsschutz umfasst und/oder einen Kurzschlussschutz.

In einfacher Art und Weise wird dies z.B. dadurch realisiert, dass dem obgenannten Verbraucherstromintegrator eine schwellwertsensitive Einheit nachgeschaltet ist, welche ausgangsseitig beim Erreichen eines Ah-Schwellwertes die Verbindung des Akkumulators zum elektrischen Verbraucher unterbricht. Der Kurzschluss-Zustand seinerseits kann durch Ueberwachung detektiert werden, wie schnell sich das Verbraucherstromintegral in der Zeit ändert, oder durch direkte Strommessung.

Im weiteren ist es, um den momentanen Zustand oder die Geschichte eines Akkumulators möglichst exakt abschätzen zu können, z.B. wesentlich zu wissen, wie oft und/oder bei welchen vergangenen Momentanzuständen er wieder aufgeladen worden ist und/oder welche Verbraucherströme über welche Zeitspannen konsumiert wurden und/oder, bei welchen Aussentemperaturen dies alles erfolgte und/oder wie lange der Akkumulator überhaupt in Betrieb stand.

Um dem Rechnung zu tragen, wird nun weiter vorgeschlagen, dass die Lade- und Ueberwachungseinheit Speicherorgane umfasst, für die elektrische und/oder Umgebungsgrössen-Zeitgeschichte des Akkumulators, wobei die genannten Speicherorgane vorzugsweise entfernbar und/oder extern auslesbar sind, wie für eine nachmalige Analyse, um zu rekonstruieren, was mit dem Akkumulator geschehen ist.

Während für die Speichermittel für die Ladesteuersequenzen vorzugsweise programmierbare nur Lesespeicher PROM oder EPROM eingesetzt werden, werden für die Abspeicherung der genannten Zeitgeschichte Lese- und Schreibespeicher eingesetzt, die mit Messwerten an der Stromversorgungsanordnung gefüllt und danach bei Bedarf ausgelesen oder durch physische Entfernung des Speichermittels andernorts gelesen und analysiert werden können.

Im weiteren wird vorgeschlagen, Steuer- und Messsignalleitungen zur bzw. von der Anordnung nach aussen zu führen und/oder entsprechende Anschlüsse vorzusehen.

Bei den Steuersignalleitungen kann es sich dabei beispielsweise um eine Steuerleitung für das Auslösen eines Ladevorganges handeln, eine Reset-Signalleitung, um bei angesprochenem Tiefentladungsschutz, nach erfolgter Wiederaufladung, diesen Schutz rückzusetzen etc. Bei den Messsignalleitungen kann es sich, je nachdem, welche Information dem Gebraucher zur Verfügung gestellt werden soll, um Leitungen für Ah-Informationen, für die momentane Spannung etc. handeln.

Im weiteren wird vorgeschlagen, dass die Lade- und Ueberwachungseinheit einen Mikroprozessor umfasst, womit in einfacher Art und Weise die Möglichkeit gegeben ist, die erfindungsgemässen Funktionen auszuführen, insbesondere auch die Registrierung und Abspeicherung der obgenannten Zeitgeschichte.

Da, wie erwähnt, erfindungsgemäss Lade- und Ueberwachungseinheit und Akkumulator baulich untrennbar vereint sind, kann nun in manchen Fällen auf das Vorsehen verschiedener Ladeprogramme verzichtet werden und, da immer derselbe Akkumulator mit der Ladeeinheit geladen wird, letztere mit einer festen Ladespannung für den Akkumulator versehen werden.

Nun ist es weiter in manchen Fällen, in denen zwei oder mehr Stromversorgungsanordnungen der genannten Art elektrisch verbunden, d.h. serie- oder parallelgeschaltet, werden, erwünscht, darüber Sicherheit zu erlangen, dass nur spezifizierte, geeignete Stromversorgungsanordnungen miteinander verbunden werden. Dies auch deshalb, weil bei derartigen elektrischen Verbindungen zwischen den einzelnen Stromversorgungsanordnungen im Betrieb eine Wechselwirkung besteht, derart, dass beispielsweise bei der Untersuchung von Gewährleistungsansprüchen bekannt sein muss, mit welchen weiteren Anordnungen eine bestimmte elektrisch verbunden war. Dies wird dadurch auf einfache Art und Weise sichergestellt, dass an der erfindungsgemässen Stromversorgungsanordnung Erkennungsmittel für elektrisch mit dieser Anordnung verbundene weitere Anordnungen vorgesehen sind.

Im speziellen wird hierzu vorgeschlagen, die Anordnung nach Anspruch 17 auszubilden.

Dadurch wird erreicht, dass, wenn zwei oder mehrere Stromversorgungsanordnungen elektrisch verbunden werden, jede der beteiligten den Code der anderen beteiligten Anordnungen liest, mit gespeicherten Codes vergleicht und den Betrieb verweigert, wenn die der spezifisch betrachteten Anordnung zugeschal teten übrigen Anordnungen nicht den gespeicherten Codierungen entsprechen. Derartige Codierungen können durch Aufschaltung einer Sequenz elektrischer Signale, wie digitaler Signale, übermittelt werden, beispielsweise in vorgegebenen zeitlichen Abständen, beispielsweise alle Stunden.

Die Erfindung wird anschliessend beispielsweise anhand von Figuren erläutert.

Es zeigen:

Fig. 1 eine schematische Darstellung einer erfindungsgemässen Stromversorgungsanordnung,

Fig. 2 anhand eines vereinfachten Funktionsblock-Diagrammes eine Realisationsvariante der erfindungsgemässen Stromversorgungsanordnung,

Fig. 3 einen Ausschnitt aus einer weiteren Realisationsvariante gemäss Fig. 1 oder 2 in Funktions-Block-Darstellung.

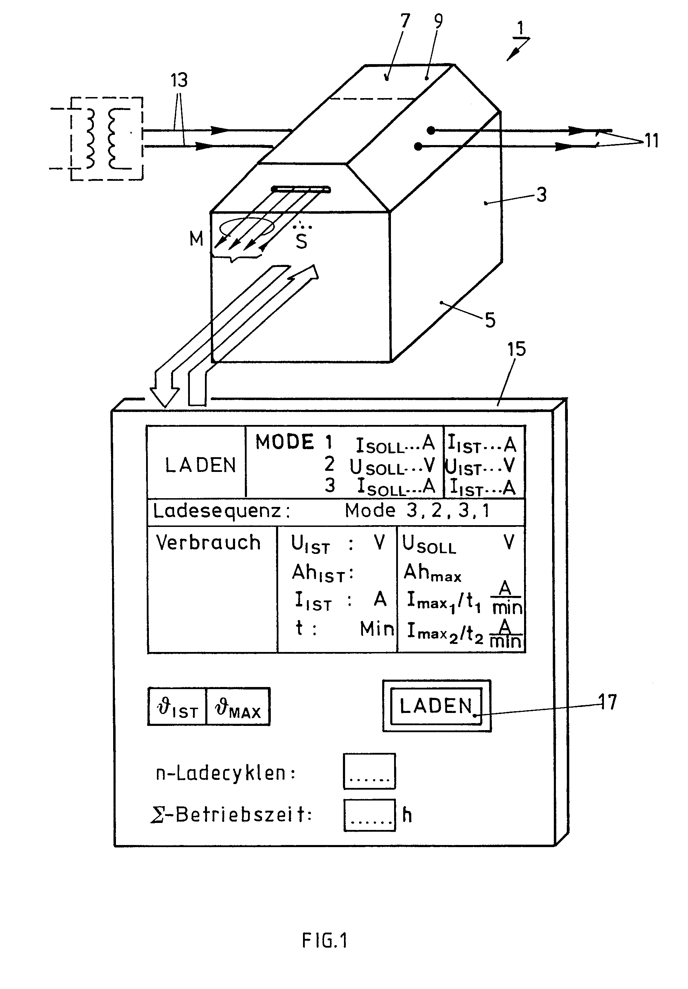

In Fig. 1 ist eine erfindungsgemässe Stromversorgungsanordnung 1 dargestellt. In einem grundsätzlich ohne Zerstörung von Teilen, wie von Plomben an Verbindungsschrauben nicht zerlegbaren Gehäuse, vorzugsweise einem einheitlichen, z.B. verklebten oder gegossenen oder vergossenen Gehäuse 3 ist ein Akkumulatorabteil 5 vorgesehen, mit einem oder mehreren Akkumulatoren, vorzugsweise Bleiakkumulatoren mit Gel-Elektrolyt, die, wie bereits erwähnt wurde, z.B. unter der Bezeichnung "Dryfit" von der Firma Sonnenschein vertrieben werden. In einem oberen Abteil 7 des zerstörungsfrei unzerlegbaren Gehäuses 3 ist eine noch nachfolgend zu beschreibende Lade- und Ueberwachungseinheit für die im Abteil 5 angeordneten Akkumulatoren vorgesehen, ihm somit fest zugeordnet. Das obere Abteil 7 kann dabei sehr wohl einen entfernbaren Deckel 9 aufweisen, durch welchen aber nur auf die darin vorgesehene Lade- und Ueberwachungseinheit zugegriffen werden kann, um Informationen auszulesen: Die untrennbare Verbindung dieser Einheit mit dem Akkumulator bleibt gewährleistet.

Aus dem einteiligen Gehäuse 3, die Akkumulatoren und die genannte Lade- und Ueberwachungseinheit können gemeinsam vergossen sein, führen Verbraucherleitungen 11 zu einem elektrischen Verbraucher. Ladeeingänge 13 führen zur Lade- und Ueberwachungseinheit. Handelt es sich bei den Ladeeingängen 13 um Eingänge für Netzanschluss, so ist selbstverständlich an der Lade- und Ueberwachungseinheit ein AC/DC-Wandler vorgesehen, um das elektrische Netzwechselsignal in ein Ladesignal für die vorgesehenen Akkumulatoren zu wandeln. In bekannter Art und Weise ist dann im oberen Abteil 7 ein Transformator mit nachgeschalteter Gleichrichterschaltung vorgesehen.

Wird aus Gewichtsgründen bevorzugt, den Transformator extern der genannten Einheit vorzusehen, wie gestrichelt dargestellt, so handelt es sich bei den Ladeeingängen 13 um Eingänge, die entweder bereits mit einem DC-Signal beaufschlagt werden oder, falls die Gleichrichterschaltung mit anschliessender Glättungsschaltung in der genannten Einheit integriert ist, um Anschlüsse für eine bezüglich Netzspannung reduzierte Wechselspannung.

In dieser Minimalkonfiguration der erfindungsgemässen Stromversorgungsanordnung sind somit lediglich Ladeanschlüsse 13 und Verbraucheranschlüsse 11 vorgesehen.

In einer weiterentwickelten Variante sind von der Lade- und Ueberwachungseinheit Messignalleitungen M und/oder Steuersignalleitungen S als Ein- bzw. Ausgänge herausgeführt oder hierfür Anschlüsse A vorgesehen. An einem elektrischen Verbraucher, in welchem die erfindungsgemässe Stromversorgungsanordnung angeordnet wird, ist ein Anzeige- und Steuertableau 15 vorgesehen, das beispielsweise folgende Informationen anzeigt bzw. folgende Steuereingriffe ermöglicht:

Mit einem Ladetaster 17 wird ein Ladezyklus für den oder die vorgesehenen Akkumulatoren ausgelöst. Daraufhin wird automatisch mit fester Ladespannung oder -strom oder, wie beschrieben werden wird, allenfalls nach Massgabe des momentanen Zustandes des Akkumulators, nach verschiedenen, abgespeicherten Ladestrom-/Spannungs-Sequenzen geladen. Eine solche Sequenz kann aus verschiedenen Mode-Bausteinen zusammengesetzt werden. Im MODE 1 erscheint am Tableau 15 eine SOLL-Ladestromanzeige, die einem an der Lade- und Ueberwachungseinheit vorabgespeicherten SOLL-Ladestrom entspricht, daneben, zur Ueberwachung, der Ladestrom-IST-Wert, gemessen an der Lade- und Ueberwachungseinheit. Entsprechend leuchten die Angaben bezüglich MODE 2 auf, mit einer vorabgespeicherten SOLL-Ladespannung und einer gemessenen IST-Ladespannung. Entsprechendes gilt für den dritten und allenfalls weitere vorgesehene Lademodes. Die Ladesequenz wird fallspezifisch aus den vorgesehenen Modes automatisch zusammengestellt und angezeigt.

Im weiteren wird beispielsweise am Tableau 15, unter der Rubrik "Verbrauch", z.B. folgendes angezeigt: Die Akkumulator-SOLL-Spannung, vorgängig abgespeichert; die Akkumulator-IST-Spannung; die ab Inbetriebnahme oder ab dem letzten Ladevorgang registrierte Ampère-Stundenzahl $Ah_{IST}$; die Nenn-Ah-Zahl. Wie im weiteren dargestellt, kann auch der IST-Verbraucherstrom neben dem vorabgespeicherten maximal zulässigen Verbraucherstrom angezeigt werden, dies in Relation gesetzt zu Zeitabschnitten, während welchen derartige Ströme verbraucht werden dürfen. So kann bei den maximal zulässigen Werten angegeben werden, dass ein erster Wert $I_{max_1}$ während eines Zeitraumes $t_1$ fliessen darf, ein zweiter Wert $I_{max_2}$ während des Zeitraumes $t_2$ etc. In der Sparte IST-Werte wird angegeben, welcher Strom während wie langer Zeit bereits verbraucht wurde. Im weiteren können am Tableau 15 Temperaturangaben, wie die Temperatur des Akkumulators $\vartheta_{IST}$ angegeben werden und als Vergleichsgrösse die maximal zulässige Akkumulatortemperatur $\vartheta_{max}$. Im weiteren werden vorzugsweise ausgegeben die Anzahl erlebter Ladezyklen und die aufsummierte Akkumulator-Betriebszeit.

Obwohl, und wie im weiteren beschrieben werden wird, die vorgesehene Lade- und Ueberwachungseinheit, insbesondere in einer bevorzugten Ausführungsform, automatisch und nach Massgabe des Momentanzustandes des Akkumulators entscheidet, ob und wie geladen werden soll und dies dann auch automatisch steuert, wenn die Ladetaste 17 betätigt wird, erlauben die Angaben am Tableau 15, falls erfordert, eine optimale Information über die Akkumulatorzustände, mindestens für Wartungsarbeiten am Verbraucher. Ein solches Tableau kann, abgesehen von der Ladetaste 17, auch weggelassen werden, wenn nicht beabsichtigt ist, den Benützer derart weitgehend zu informieren, beispielsweise aus der Einsicht heraus, dass er, selbst bei entsprechender Information, daraus nicht die richtigen Schlüsse ziehen kann. Ein derartiges Tableau kann aber auch an einer für den Normalverbraucher unzugänglichen Stelle am elektrischen Verbraucher vorgesehen sein, beispielsweise für Servicepersonal.

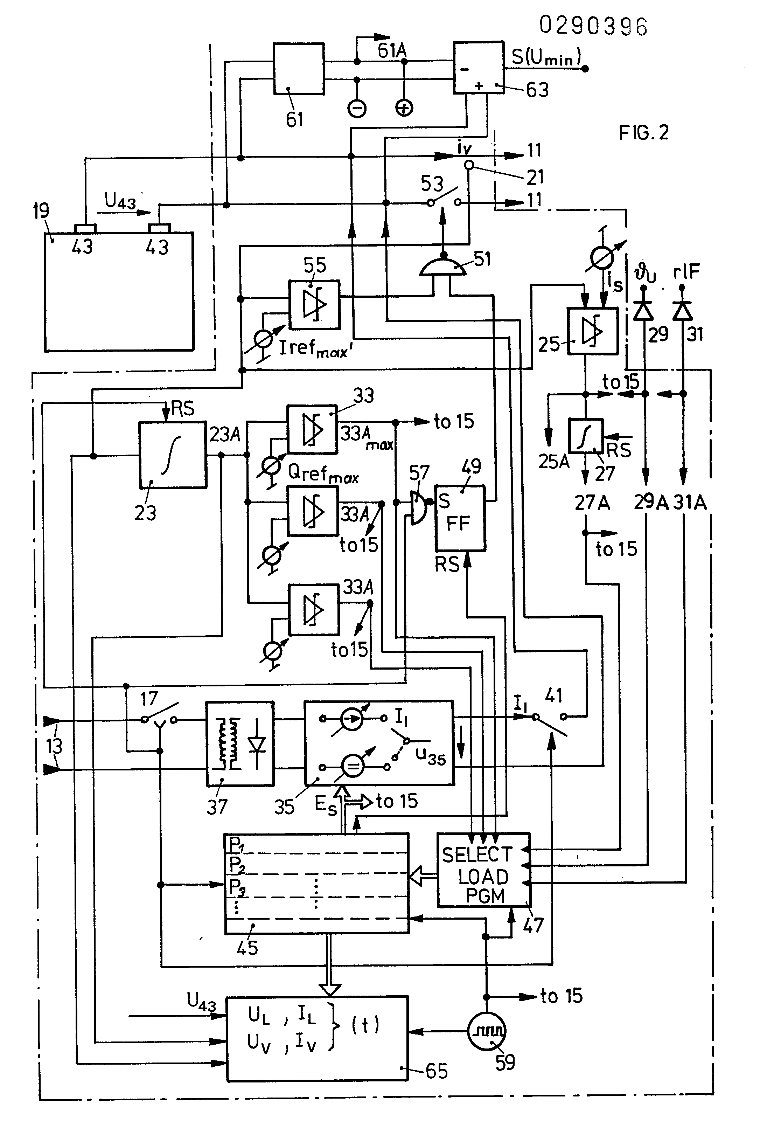

In Fig. 2 ist, vereinfacht, der Aufbau einer erfindungsgemässen Lade- und Ueberwachungseinheit anhand eines Funktionsblock-Diagrammes dargestellt.

Die Anschlussklemmen 43 eines vorzugsweise mindestens nahezu gasungsfrei ladbaren Akkumulators 19 bzw. Akkumulatorsatzes, z.B. Bleiakkumulatoren mit Gel-Elektrolyt umfassend, sind auf die Verbraucherausgänge 11 geführt.

Der Verbraucherstrom $i_v$ wird mittels einer Strommessanordnung 21 gemessen und ein diesem Strom entsprechendes Signal einer Integrationseinheit 23 zugeführt. Damit erscheint an einem Ausgang 23A ein dem Zeitintegral des Verbraucherstromes $i_v$ entsprechendes Signal in Ah. Dieses Signal ist repräsentativ für die vom Akkumulator ab dem letzten Rücksetzzeitpunkt der Integrationseinheit 23 geflossene Strommenge (Ladung).

Die Integrationseinheit 23 kann dabei einen ersten Integrator umfassen, der nicht rücksetzbar ist und ab erster Inbetriebnahme des Akkumulators den Verbraucherstrom aufintegriert, und/oder einen Integrator umfassen, der bei jedem Ladevorgang rückgesetzt wird, wie der in Fig. 2 dargestellte. Im weiteren wird das dem momentanen Verbraucherstrom $i_v$ entsprechende Signal einer oder mehreren schwellwert-sensitiven Einheiten, wie Komparatoren 25 zugeführt, die ausgangsseitig ansprechen, wenn der Verbraucherstrom $i_v$ einen daran eingestellten

Grenzwert $i_s$ erreicht. Erreichen oder Ueberschreiten eines solchen Grenzwertes $i_s$ wird auf dem oder den Ausgängen 25A angezeigt. Dieses Anzeigesignal auf Ausgang 25A wird einer Integrationseinheit 27 zugeführt, rücksetzbar, beispielsweise durch Auslösen eines Ladevorganges.

Am Ausgang der Integrationseinheit 27 erscheint somit, sobald der Referenzwert $i_s$ vom Verbraucherstrom überschritten wird, ein Signal, das anzeigt, wie lange der genannte Referenzwert $i_s$ vom Verbraucherstrom $i_v$ überschritten worden ist. Im weiteren ist z.B. eine Temperaturmesseinrichtung 29 sowie eine Messeinrichtung 31 für die relative Luftfeuchtigkeit, wie schematisch dargestellt, im Bereich des Akkumulators 19 angebracht. Sie liefern Ausgangssignale auf die entsprechenden Leitungen 29A und 31A. Mit der Registrierung der ab Inbetriebnahme des Akkumulators 19 und/oder ab letztem Ladevorgang geflossenen Strommengen durch die Integrationseinheit 23 sowie des Ueberschreitens vorgegebener Grenzstromwerte $i_s$, wie am Ausgang 25A angezeigt, weiter der Angaben, wie lang diese Grenzstromwerte $i_s$ überschritten worden sind, weiter z.B. von Temperatur und relativer Luftfeuchtigkeit, wird der momentane Zustand des Akkumulators 19, je nach betriebenem Aufwand, mehr oder weniger genau festgehalten. Es kann dabei einer der Grenzstromwerte als Kurzschlussindikation gesetzt werden und bei seinem Erreichen der Verbraucher abgetrennt werden.

Der Ausgang 23A der Integrationseinheit 23 wird nun weiter mehreren schwellwert-sensitiven Einheiten 33 zugeführt, denen je Schwellwertsignale bzw. Referenzsignale $Q_{ref}$ zugeschaltet sind. Erreicht der an der Integrationseinheit 23 registrierte Ah-Wert entsprechend dem Verbraucherstrom-Zeitintegral jeweils einen der an den schwellwert-sensitiven Einheiten 33 eingestellten Referenzwerte $Q_{ref}$, so erscheint daran ausgangsseitig, an den Ausgängen 33A, ein Anzeigesignal.

Somit stehen ein oder mehrere der folgenden Signale, die den Momentanzustand des Akkumulators 19 identifizieren, zur Verfügung:

- An den Ausgängen 33A Signale, die das Erreichen vorgegebener Werte durch das Verbraucherstrom-Zeitintegral anzeigen.

- An dem oder den Ausgängen 27A Signale, die anzeigen, ob und wie lange vorgegebene Grenzströme durch den Verbraucherstrom $i_v$ erreicht bzw. überschritten wurden.

- Am Ausgang 29A ein Signal, das die Momentantemperatur des Akkumulators anzeigt.

- An einem Ausgang 31A ein Signal, das die relative Luftfeuchtigkeit in der Umgebung des Akkumulators 19 anzeigt.

Für das Laden des Akkumulators 19 ist eine Ladungs-Stromquellen-/-Spannungsquellen-Einheit 35 vorgesehen, welche entweder umschaltbar in einem Stromquellen-Mode oder einem Spannungsquellen-Mode betrieben werden kann. Im Stromquellen-Mode liefert die Einheit 35, unabhängig von ihrer Ausgangsspannung $u_{35}$, einen oder mehrere vorgebbare Ladeströme $I_e$, während im Spannungs-Mode die Einheit 35, unabhängig vom Ladestrom $I_e$, einen oder mehrere vorgebbare Spannungswerte $u_{35}$ ausgibt. Der Stromquellen/Spannungsquelleneinheit 35 ist, an der erfindungsgemässen Stromversorgungsanordnung 1 gemäss Fig. 1 integriert oder davon abgetrennt, eine Transformator- und Gleichrichtereinheit 37 vorgeschaltet, welche über den Ladetaster 17 und Leitungen 13 ans speisende Netz schaltbar ist. Ausgangsseitig ist die Stromquellen/Spannungsquelleneinheit 35 über einen Schalter 41 mit den Anschlüssen 43 des Akkumulators 19 verbunden. Die Stromquellen/Spannungsquelleneinheit 35 umfasst weiter Steuereingänge $E_S$.

An diesen Steuereingängen $E_S$ wird gesteuert, wie lange die Einheit 35 in welchem Mode betrieben wird und bei welchen Werten der Ladeströme $I_e$ bzw. der Ladespannung $u_{35}$. Die Steuereingänge $E_S$ sind mit den Ausgängen einer Ladeprogramm-Steuereinheit 45 verbunden. Darin sind mehrere Ladesequenzen bzw. Ladeprogramme abgespeichert. Ein solches Programm kann z.B. wie folgt aufgebaut sein: Laden mit einem ersten vorgegebenen konstanten Ladestrom $I_{e1}$ während einer vorgegebenen Anzahl Minuten $t_1$, dann Laden bei vorgegebener Ladespannung $u_{35}$ während einer weiteren Anzahl Minuten $t_2$, dann wiederum Laden mit einem weiteren vorgegebenen, konstanten Ladestrom $I_{e2}$ während eines weiteren Zeitabschnittes $t_3$ etc. Welches dieser Ladeprogramme $P_1$, $P_2$ etc. für die Stromquellen/Spannungsquelleneinheit 35 steuerwirksam wird, wird mittels einer Selektionseinheit 47 bestimmt. Ihr werden grundsätzlich die den Zustand des Akkumulators 19 identifizierenden Signale zugeführt, gemäss Fig. 2 die Ausgangssignale der schwellwert-sensitiven Einheiten 33 sowie die Signale auf den Leitungen 27A, 29A und 31A. Aufgrund voreingegebener Entscheidungskriterien bestimmt die Selektionseinheit 47, sobald über den Ladetaster 17 ein Ladevorgang ausgelöst wird, welches der an der Ladeprogramm-Steuereinheit 45 abgespeicherten Ladeprogramme $P_x$ an der Stromquellen/Spannungsquelleneinheit 35 angesteuert werden soll.

Ueberschreitet das Verbraucherstrom-Zeitintegral entsprechend dem Signal am Ausgang 23A der Integrationseinheit 23 einen vorgebbaren Maximalwert entsprechend $Q_{refmax}$, was dem Erreichen der maximalen zur Verfügung stehenden Akkumulator-Kapazität entspricht, so wird über den Ausgang $33A_{max}$ der entsprechenden schwellwert-sensitiven Einheit 33 und eine ODER-Schaltung 57 eine bistabile Einheit 49 gesetzt, die ausgangsseitig über eine ODER-Verbindung 51 einen verbraucherseitigen Unterbrecherschalter 53 öffnet, so dass der Akkumulator 19 vom Verbraucher abgetrennt wird. Ueber die ODER-Verbindung 51 wird im weiteren der Trennschalter 53 auch betätigt, wenn der Verbraucherstrom $i_v$ einen Maximalwert, entsprechend einem an einer Komparatoreinheit 55 einstellbaren maximalen Verbraucherstrom $I_{refmax}$, erreicht. Damit ist ein Tiefentladungs- und ein Kurzschlussschutz des Akkumulators 19 sichergestellt. Im weiteren wird die bistabile Einheit 49 über diese ODER-Schaltung 57 immer gesetzt und damit der Trennschalter 53 geöffnet, wenn der Ladetaster 17 betätigt wird, wodurch während des Ladevorganges der Akkumulator vom elektrischen Verbraucher abgetrennt ist.

Rückgesetzt wird die bistabile Einheit 49 nach Abschluss eines Ladevorganges durch ein Steuersignal RS, das nach Beendigung eines entsprechenden Ladeprogrammes $P_x$ von der Ladeprogramm-Steuereinheit 45 ausgegeben wird.

An den gemäss Fig. 1 beschriebenen Anzeigen am Tableau 15 werden, einerseits von der Ladeprogramm-Steuereinheit 45, der momentane Lademodus angezeigt, als Ladesequenz die gewählte Modussequenz, d.h. das Ladeprogramm, der Ladestrom oder die Ladespannung, dann vom Ausgang der Integrationseinheit 23 das Zeitintegral des Verbraucherstromes, weiter der Verbraucherstrom selber und weitere interessierende Informationen, wie vom Ausgang eines oder mehrerer der schwellwert-sensitiven Einheiten 33 oder von den Ausgängen 25A, 27A, 29A und 31A. Der Zeittakt der Anzeigen am Tableau 15, der Programmsteuereinheit 45 sowie der Selektionseinheit 47 wird durch einen Zeittaktgenerator 59 gesteuert.

Um unabhängig von der momentanen Ausgangsspannung des Akkumulators 19 die verschiedenen vorgesehenen elektrischen und elektronischen Komponenten zu speisen, sind die Akkumulatoranschlüsse 43 auf einen Konstantspannungsregler 61 geführt, an dessen Ausgängen 61A eine geregelte, konstante Ausgangsspannung erscheint, als Speisespannung für die verschiedenen vorgesehenen Bauteile. Der Ausgang 61A kann im weiteren einer Komparatoreinheit 63 zugeführt sein, woran ein Vergleich der geregelten konstanten Spannung mit der Ausgangsspannung des Akkumulators 19 an den Anschlüssen 43 erfolgt und an deren Ausgang ein Signal $S(U_{min})$ erscheint, wenn die Akkumulatorspannung einen vorgegebenen Minimalwert erreicht bzw. unterschreitet.

Um die Geschichte des Akkumulators 19, was seine Verbraucherdaten, Ladedaten, Temperatur etc. anbelangt, jederzeit abrufen und analysieren zu können, wie im Falle von Defekten, wird, wie in Fig. 2 dargestellt, ein Geschichtsspeicher 65 vorgesehen. Ihm werden z.B. Verbraucherstrommessignale von der Strommessanordnung 21 von einer Akkumulatorspannungs-Messvorrichtung (nicht dargestellt), ein Spannungsmesssignal, das Ausgangssignal des Verbraucherstromintegrators 23, weiter (nicht dargestellt) erreichte Maximalströme bzw. Grenzströme vom Ausgang 25A bzw. 27A, Umgebungstemperaturverhältnisse vom Ausgang 29A, allenfalls die Verläufe der relativen Luftfeuchtigkeit am Ausgang 31A sowie die Ausgänge der schwellwert-sensitiven Einheiten 33 zugeführt, und die entsprechenden Daten werden, getaktet durch den Zeittaktgenerator 59, während der ganzen Lebensdauer eines Akkumulators 19 abgespeichert. Im weiteren werden dem Geschichtsspeicher 65 von der Ladeprogramm-Steuereinheit 45 die Informationen eingegeben, wann und wie der Akkumulator 19 geladen worden ist. Mit Hilfe der im Geschichtsspeicher 65 abgespeicherten Angaben kann jederzeit analysiert werden, was mit dem Akkumulator 19 geschehen ist, um so beispielsweise nach Ursachen für mögliche Defekte zu suchen.

Insbesondere wird, beispielsweise durch Zählen der Ladeschalter 17-Betätigungen, mittels eines Zählers (nicht dargestellt) registriert, wie oft der Akkumulator 19 geladen wurde, und dies im Geschichtsspeicher 65 zum Abrufen bereitgehalten. Desgleichen wird registriert, wie oft eine Tiefentladungsgefahr am Ausgang 33 $A_{max}$ angezeigt wurde, durch einen (nicht dargestellten) Zähler, und dies ebenfalls im Speicher 65 festgehalten. Dasselbe gilt für die Registrierung und das Festhalten von Kurzschlussgefahren, angezeigt an der Komparatoreinheit 55. Die akkumulierte Betriebszeit des Akkumulators wird beispielsweise durch Ingangsetzen eines Zeitzählers bei gemessenem Verbraucherstrom durch die Messanordnung 21 registriert.

Die ganze Lade- und Ueberwachungsanordnung wird, wie strichpunktiert eingetragen, vorzugsweise mit Hilfe eines Mikroprozessors bzw. Mikrocomputers realisiert.

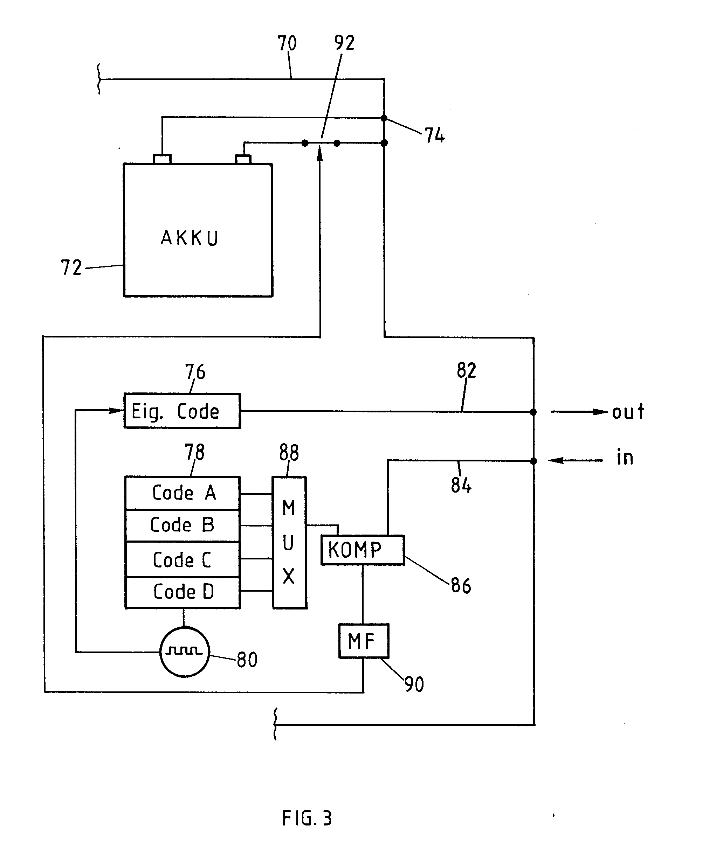

In Fig. 3 ist eine weitere Ausbildungsvariante der erfindungsgemässen Stromversorgungsanordnung dargestellt. Das Gehäuse 70 umschliesst erfindungsgemäss untrennbar einen Akkumulator 72 sowie die Lade- und Ueberwachungseinheit, ausgebildet wie beispielsweise in Fig. 2 dargestellt, wovon aber in Fig. 3, aus Uebersichtsgründen, nur die bei diesem Ausführungsbeispiel zusätzlich vorgesehenen Organe dargestellt sind. Die Anschlüsse des Akkumulators 72 sind auf Verbraucherstromausgänge 74 geführt. An der Ueberwachungseinheit ist ein Speicher 76, beispielsweise ein EPROM, vorgesehen, worin ein der betrachteten Stromversorgungsanordnung zugehöriger Code eingegeben ist. In einem weiteren Speicher 78, beispielsweise ebenfalls ein EPROM, ist mindestens ein weiterer Code gespeichert, gemäss Fig. 3 beispielsweise vier Codes A bis D, welche den fest zugeordneten Codes weiterer, mit der betrachteten Stromversorgungsanordnung elektrisch zulässigerweise verbindbarer Stromversorgungsanordnungen entsprechen. Die elektrische Verbindung zweier oder mehrerer Stromversorgungsanordnungen kann in bekannter Art und Weise in Serie oder parallel erfolgen. In vorgegebenen Zeitabständen, getaktet durch einen schematisch dargestellten Taktgenerator 80 wird der Eigencode aus Speicher 76 an einen Ausgabeanschluss 82 gelegt und von dort an eine weitere oder mehrere weitere Stromversorgungsanordnungen geleitet. Ueber einen Eingabeanschluss 84 wird, entsprechend, der Eigencode einer weiteren zugeschalteten Stromversorgungsanordnung eingespiesen und einer Komparatoreinheit 86 zugeführt. Daran werden über eine Multiplexereinheit 88 sequentiell alle im Speicher 78 abgespeicherten Codes mit dem auf dem Eingabeanschluss 84 zugeführten Code verglichen. Stimmt der auf Anschluss 84 zugeführte Code mit einem der in Speicher 78 abgespeicherten Codes überein, so bleibt ein dem Komparator 86 nachgeschaltetes Element, beispielsweise ein Monoflop-Element 90, permanent gesetzt, und hält ein Schaltorgan 92 in der Verbraucherstromleitung zwischen den Anschlüssen 74 und dem Akkumulator 72 geschlossen. Ist keine Uebereinstimmung zwischen dem auf Anschluss 84 zugeführten Code und den in Speicher 78 gespeicherten Codes auffindbar, so wird der Verbraucher durch Oeffnen des Schaltorgans 92 von der Stromversorgungsanordnung abgeschaltet.

Damit ist sichergestellt, dass bei elektrisch kombiniertem Betrieb mehrerer Stromversorgungsanordnungen nur die jeweils zugelassenen Kombinationen auf einen Verbraucher wirken können. Dabei versteht sich von selbst, dass die Hin- und Her-Uebermittlung der entsprechenden Codes zwischen den Stromversorgungsanordnungen je über einzelne, an den Anschlüssen 82 und 84 angeschlossene Verbindungsleitungen vorgenommen werden kann, dass aber, auch unter Ausnützung bekannter Modulationstechniken, diese Code-Uebermittlung durchaus über die bei der erwähnten Kombination verbundenen Verbraucherstromleitungen, d.h. über die Anschlüsse 74 erfolgen kann. Der Austausch der Identifikations-Codes erfolgt in vorgegebenen Zeitabständen, beispielsweise alle Viertelstunden, oder, falls es Betriebssicherheitsgründe erfordern, in kürzeren Zeitabständen, wie alle zehn Sekunden. Dabei erfolgt die Code-Uebermittlung beispielsweise auf Basis einer seriellen Durchschaltung von Digitaldaten.

**Patentansprüche**

1. Stromversorgungsanordnung mit mindestens einem wieder ladbaren Akkumulator, einer Lade- und Ueberwachungseinheit sowie mit Verbraucherstromausgängen und einem Ladespeisungseingang, dadurch gekennzeichnet, dass der Akkumulator und die Lade- und Ueberwachungseinheit baulich so vereint sind, dass sie ohne Zerstörung von Verbindungsmitteln nicht trennbar sind, und dass die Ueberwachungseinheit elektrisch durch den Akkumulator gespiesen ist.

2. Anordnung, vorzugsweise nach mindestens einem der Ansprüche, wie nach Anspruch 1, dadurch gekennzeichnet, dass der Akkumulator ein mindestens genähert gasungsfrei ladbarer Akkumulator ist, vorzugsweise ein Bleiakkumulator mit Gel-Elektrolyt ist, und vorzugsweise der Akkumulator und die Einheit einteilig ummantelt, wie vergossen sind.

3. Anordnung, vorzugsweise nach mindestens einem der Ansprüche, wie nach einem der Ansprüche 1 oder 2, dadurch gekennzeichnet, dass die Lade- und Ueberwachungseinheit mindestens einen Verbraucherstromintegrator (23) umfasst.

4. Anordnung, vorzugsweise nach mindestens einem der Ansprüche, wie nach einem der Ansprüche 1 bis 3, dadurch gekennzeichnet, dass die Lade- und Ueberwachungseinheit mindestens eine steuerbare Ladestrom- und/oder -Spannungsquelle (35) umfasst.

5. Anordnung, vorzugsweise nach mindestens einem der Ansprüche, wie nach einem der Ansprüche 1 bis 4, dadurch gekennzeichnet, dass die Lade- und Ueberwachungseinheit eine Ladeprogramm-Steuereinheit (45) umfasst, die den zeitlichen Verlauf der Ladespannung und/oder des Ladestromes auf den Akkumulator (19) steuert.

6. Anordnung, vorzugsweise nach mindestens einem der Ansprüche, wie nach einem der Ansprüche 1 bis 5, dadurch gekennzeichnet, dass die Lade- und Ueberwachungseinheit eine Ladeprogramm-Steuereinheit (45) mit Speichermitteln für mindestens zwei Steuersequenzen (P) umfasst, und dass die Ladeprogramm-Steuereinheit (45), die Ladespannung und/oder den Ladestrom entsprechend den abgespeicherten Sequenzen (P) ansteuert.

7. Anordnung, vorzugsweise nach mindestens einem der Ansprüche, wie nach einem der Ansprüche 1 bis 6, dadurch gekennzeichnet, dass an der Lade- und Ueberwachungseinheit Organe (21, 23, 25, 29, 31) vorgesehen sind zur Registrierung den Momentanzustand des Akkumulators (19) identifizierender physikalischer Grössen, wie dessen Einsatzzeit, der Anzahl erlebter Ladeoperationen, erlebter Tiefentladungen, erlebter Kurzschlüsse, und zu deren Ausgabe, und dass allenfalls diese Organe mit einer Selektionseinheit (47) verbunden sind, welche aufgrund der ihr zugeführten Identifizierungsinformation eine Ladeprogramm-Steuereinheit (54) zur Aufschaltung einer entsprechenden Ladesequenz (P) ansteuert.

8. Anordnung, vorzugsweise nach mindestens einem der Ansprüche, wie nach einem der Ansprüche 1 bis 7, dadurch gekennzeichnet, dass die Lade- und Ueberwachungseinheit einen Verbraucherstromintegrator (23) umfasst, der eine Diskriminatoreinheit (33) nachgeschaltet ist, welche das Erreichen vorgegebener Werte ($Q_{ref}$) des Verbraucherstrom-Zeitintegrals registriert, und dass die Diskriminatoreinheit ausgangsseitig die Art und Weise eines nachfolgenden Aufladevorganges ansteuert.

9. Anordnung, vorzugsweise nach mindestens einem der Ansprüche, wie nach einem der Ansprüche 1 bis 8, dadurch gekennzeichnet, dass die Akkumulatorspannung über einen Spannungsregler (61) Komponenten der Lade- und Ueberwachungseinheit elektrisch speist.

10. Anordnung, vorzugsweise nach mindestens einem der Ansprüche, wie nach einem der Ansprüche 1 bis 9, dadurch gekennzeichnet, dass Steuer- und Messsignalleitungen (M, S) zur bzw. von der Anordnung nach aussen auf ein Ueberwachungs- und/oder Bedienungstableau (15) geführt sind, und/oder dass Anschlüsse für derartige Leitungen vorgesehen sind.

11. Anordnung, vorzugsweise nach mindestens einem der Ansprüche, wie nach einem der Ansprüche 1 bis 10, dadurch gekennzeichnet, dass die Lade- und Ueberwachungseinheit einen Tiefentladungsschutz (33, 49, 51, 53) und/oder einen Kurzschlussschutz (55, 51, 53) umfasst.

12. Anordnung, vorzugsweise nach mindestens einem der Ansprüche, wie nach einem der Ansprüche 1 bis 11, dadurch gekennzeichnet, dass die Lade- und Ueberwachungseinheit Speicherorgane (65) umfasst, für die Registrierung den Zustand des Akkumulators (19) identifizierender Signale, wobei die Speicherorgane (65) vorzugsweise entfernbar sind und/oder extern auslesbar sind, für eine nachmalige Analyse.

13. Anordnung, vorzugsweise nach mindestens einem der Ansprüche, wie nach einem der Ansprüche 1 bis 12, dadurch gekennzeichnet, dass die Lade- und Ueberwachungseinheit einen Mikroprozessor umfasst.

14. Anordnung, vorzugsweise nach mindestens einem der Ansprüche, wie nach einem der Ansprüche 1 bis 13, dadurch gekennzeichnet, dass die Lade- und Ueberwachungseinheit Mittel umfasst, um das Stattfinden von Ladeoperationen zu registrieren, sowie auslesbare Speichermittel, um mindestens die Anzahl stattgefundener Ladeoperationen zu registrieren und auszugeben.

15. Anordnung, vorzugsweise nach mindestens einem der Ansprüche, wie nach einem der Ansprüche 1 bis 14, dadurch gekennzeichnet, dass die Lade- und Ueberwachungseinheit einen Zeitnehmer umfasst, der eine Einsatzzeit der Anordnung ab einem vorgegebenen Zeitpunkt registriert, vorzugsweise die akkumulierte Verbraucherbetriebszeit.

16. Anordnung, vorzugsweise nach mindestens einem der Ansprüche, wie nach einem der Ansprüche 1 bis 15, dadurch gekennzeichnet, dass die Lade- und Ueberwachungseinheit eine feste Ladespannung für den Akkumulator erzeugt.

17. Anordnung, vorzugsweise nach mindestens einem der Ansprüche, wie nach einem der Ansprüche 1 bis 16, dadurch gekennzeichnet, dass die Anordnung Speichermittel mit einer Festcodierung umfasst, die über einen Ausgabeanschluss aus der Anordnung ausgebbar ist, weitere Speichermittel mit eingegebenen Festcodierungen, einen Eingabeanschluss, um eine Codierung in die Anordnung einzulesen, sowie Vergleichermittel, um eine eingelesene Codierung mit Codierungen im weiteren Speicher zu vergleichen und um bei Auffinden keiner Uebereinstimmung die Verbraucheranschlüsse abzuschalten, um so bei Betrieb der Anordnung gekoppelt mit anderen Stromversorgungsanordnungen, nur solche andere Stromversorgungsanordnungen zum gemeinsamen Betrieb zuzulassen, deren Code in den weiteren Speichermitteln gespeichert ist.

18. Anordnung, vorzugsweise nach mindestens einem der Ansprüche, wie nach einem der Ansprüche 1 bis 17, dadurch gekennzeichnet, dass Erkennungsmittel für elektrisch mit der Anordnung verbundene weitere Stromversorgungsanordnungen vorgesehen sind, welche vorzugsweise bei Nichterkennen die Verbindung zu einem Verbraucher aufheben oder

nicht erstellen.

0290396

FIG.1

FIG. 2

0290396

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | FR-A-2 260 211  (D.A.V.)<br>* Seite 10, Zeilen 1-16; Figuren 1-3 *<br>--- | 1,3 | H 02 J  7/10<br>H 02 J  7/00<br>H 01 M  10/46 |
| A,D | GB-A-2 028 022  (DIEHL)<br>* Seite 1, Zeilen 52-65; Figur 1 *<br>--- | 1 | |
| A,D | DE-A-3 521 200  (JACHE)<br>* Anspruch 1 *<br>--- | 2 | |
| A,D | FR-A-2 507 016  (LUCAS)<br>* Seite 3, Zeilen 1-29; Seite 4, Zeilen 4-25; Figuren 1-3 *<br>--- | 3,5-8, 12 | |
| A | EP-A-0 067 590  (FIRING CIRCUITS INC.)<br>* Seite 71, Zeilen 1-18; Figur 1 *<br>--- | 4 | |
| A | DE-C- 973 078  (B.B.C.)<br>* Ansprüche 1,2; Figur *<br>--- | 4 | |
| A | ELEKTROTECHNIK, Band 68, Nr. 20, März 1986, Seiten 54,57, Würzburg, DE;<br>"Alles unter Kontrolle"<br>* Seite 57, linke Spalte, Zeilen 18-56; Figuren 1-3 *<br>----- | 10,13 | **RECHERCHIERTE SACHGEBIETE (Int. Cl.4)**<br><br>H 02 J<br>H 01 M |

Der vorliegende Recherchenbericht wurde für alle Patentansprüche erstellt

| Recherchenort | Abschlußdatum der Recherche | Prüfer |
|---|---|---|
| DEN HAAG | 18-07-1988 | GOETZ P.A. |